# EUROPÄISCHE PATENTANMELDUNG

(11) **EP 1 462 391 A1**
(43) Veröffentlichungstag der Anmeldung: **29.09.2004**
(21) Anmeldenummer: 04007497.3
(22) Anmeldetag: 27.03.2004
(51) Int. Cl.: B65G 1/02

(54) **Lagervorrichtung**

(30) Priorität: 28.03.2003 DE 20305148 U
(71) Anmelder: Megamat GmbH Büro- und Lagertechnik, 86476 Neuburg/Kammel (DE)
(72) Erfinder: Preschke Harald, 89250 Senden (DE)
(74) Vertreter: Fiener, Josef

(57) **Zusammenfassung**

Zur Erhöhung der Variabilität und Belastbarkeit einer Lagervorrichtung (1) in Form eines mechanischen Schrankes mit einer Vielzahl von Lagergutträgern (3), die in Regalrahmen (2) auf Auflagewinkeln (2a) aufliegen und von einer Lagervorrichtung mit einer höhenbeweglichen Zubringer-Plattform (4) selektiv zu einer Ein-/Auslageröffnung (5) bewegbar sind, wird vorgeschlagen, dass
an den Seitenflächen der Lagergutträger (3) Gleitführungen mit einer engen Rasterung oder Rollenführungen mit einer weiteren Rasterung befestigt sind, die wechselweise in der Lagervorrichtung (1) mit vorgegebenem Rastermaß (R) der Auflagewinkel (2a) einlagerbar sind.

## Beschreibung

Die Erfindung betrifft eine Lagervorrichtung in Form eines mechanischen Schrankes mit einer Vielzahl von Lagergutträgern, die in Regalrahmen auf Auflagewinkeln aufliegen und von einer Antriebseinrichtung mit einer höhenbeweglichen Plattform selektiv zu einer Ein-/Auslageröffnung bewegbar sind.

Eine derartige Lagervorrichtung ist aus der US-A-5,810,540 bekannt. Hierbei ist ein mechanischer Schrank beschrieben, bei dem eine Vielzahl von kassettenartigen Lagergutträgern in zwei seitlichen Regalrahmen ein- bzw. ausschiebbar ist. Zwischen diesen beiden rechten bzw. linken Stapelsäulen ist eine Zubringer-Plattform in Höhenrichtung verfahrbar, so dass einzelne Lagergutträger aus dem Regalrahmen entnommen werden können und zur Auslagerung einer Öffnung zugeführt werden können. Bei dem genannten Stand der Technik sind Führungsblöcke vorgesehen, an denen die Lagergutträger in die Regalrahmen eingeschoben bzw. herausgezogen werden können. Aufgrund der hohen Reibung bei hohen Lasten ist die Lebens- bzw. Wartungsdauer jedoch gering. Zudem ist die Lagerraumausnutzung bei Beladung mit niedrigeren Lasten relativ gering, da dann viel Freiraum zwischen den Lagergutträgern verbleibt.

Demzufolge liegt der Erfindung die Aufgabe zugrunde, eine Lagervorrichtung zu schaffen, deren Lagergutträger sowohl mit Gleit- als auch mit Rollenführungen für hohe Lasten bei großer Variabilität betrieben werden können.

Diese Aufgabe wird gelöst durch eine Lagervorrichtung gemäß den Merkmalen des Anspruches 1.

Durch die wechselweise mögliche Befestigung von Gleitführungen mit mehreren Einschubpositionen und damit optimaler Raumausnutzung einerseits oder Rollenführungen andererseits bei hohen Lasten können die Lebensdauer und Wartungsintervalle der Lagergutträger erheblich gesteigert werden. Zudem kann mittels der Rollenführungen eine schnelle Ein-/Auslagerung erreicht werden. Da zudem die Rollenführungen eine einfache Bauweise ermöglichen, wird die Variabilität wesentlich erhöht. Von besonderem Vorteil ist die Anwendung in Lagervorrichtungen mit einer vertikal beweglichen Zubringer-Plattform, die zwischen zwei gegenüberliegenden Regalrahmen höhenverfahrbar ist. Hierdurch ergibt sich weiterhin eine optimale Kraftabstützung auf die Regalrahmen der Lagervorrichtung. Bevorzugt sind die Gleitführungen bzw. Rollenführungen an Abkantungen bzw. Anschlägen der Lagergutträger exakt ausgerichtet, so dass sich bei gleichem Lochbild ein schneller Austausch ergibt.

Weitere vorteilhafte Ausgestaltungen sind Gegenstand der Unteransprüche.

Nachfolgend wird ein Ausführungsbeispiel der Lagervorrichtung anhand der Zeichnung näher erläutert und beschrieben. Hierbei zeigen:
- Fig. 1: eine Perspektivdarstellung einer Lagervorrichtung;
- Fig. 2: eine Schnittdarstellung der Lagervorrichtung gemäß Fig. 1;
- Fig. 3: eine Darstellung eines Lagergutträgers in Perspektivansicht;
- Fig. 4: eine Seitenansicht gemäß dem Pfeil A in Fig. 3; und
- Fig. 5: eine Seitenansicht gemäß dem Pfeil B in Fig. 3.

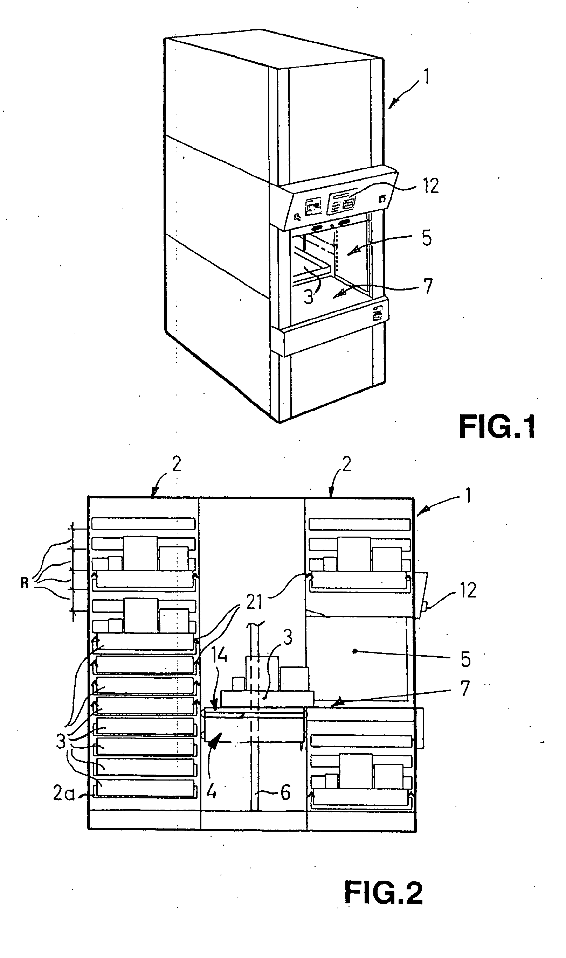

In Fig. 1 ist eine Perspektivdarstellung einer Lagervorrichtung 1 in Form eines mechanischen Schrankes gezeigt, der im wesentlichen aus zwei hintereinander angeordneten Regalrahmen 2 besteht (vgl. auch Fig. 2), in denen eine Vielzahl von flachen Lagergutträgern 3 auf seitlichen Auflagewinkeln 2a einlagerbar sind. Die Lagergutträger 3 werden hierbei durch eine Zubringer-Plattform 4 von einer Ein-/ Auslageröffnung 5 abgeholt und zu dem jeweiligen Fach in dem Regalrahmen 2 transportiert. Die Auslagerung erfolgt dabei in umgekehrter Weise, indem der jeweilige Lagergutträger 3 von entsprechenden Auflagewinkeln 2a an einem vorbestimmten Platz des Regalrahmens 2 gezogen wird, von der Zubringer-Plattform 4 dann auf die Ein-/Auslagerebene 7 der Ein-/Auslageröffnung 5 bewegt wird und dann in diese ausgeschoben wird. Die Steuerung der Einlagerung bzw. Auslagerung erfolgt im allgemeinen dabei mittels einer Antriebsvorrichtung prozessorgesteuert, wobei das Steuerteil beispielsweise hinter einem hier schematisch dargestellten Bedienfeld 12 angebracht ist, mit dem bestimmte Fachplätze in dem Regalrahmen 2 angewählt werden können. In der Ein-/Auslageröffnung 5 kann dabei auch ein Höhensensor vorgesehen sein, der die Höhe des einzulagernden Lagergutträgers 3 erfasst und diesem dann ein entsprechender Platz im Regalrahmen 2 zugewiesen wird. Hierdurch ist eine hohe Variabilität und Lagerplatznutzung in der Lagervorrichtung 1 gegeben, da die Lagergutträger 3 auf mehreren Höhenpositionen im Rastermaß R der Auflagewinkel 2a (vgl. Fig. 2) eingeschoben werden können.

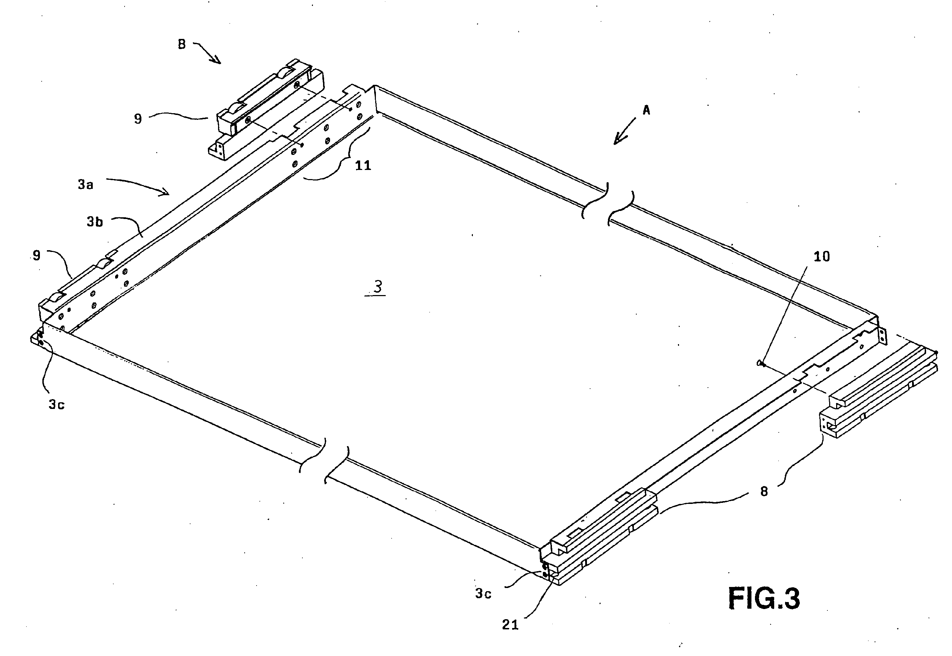

Zur Ein-/Auslagerung der jeweiligen Lagergutträger 3 sind an der Oberseite der Zubringer-Plattform 4 z. B. Kettenantriebe 14 vorgesehen, mit denen die jeweiligen Lagergutträger 3 aus der Einlageröffnung 5 übernommen werden können bzw. auf diese ausgeschoben werden können. Um hierbei mit dem jeweiligen Lagergutträger 3 in Eingriff gehen zu können, ist beispielsweise ein vorderes bzw. rückseitiges Eingriffsprofil 21 (nur an einigen Lagergutträgern 3 durch je einen Haken angedeutet) für die Kettenantriebe 14 vorgesehen. In dieses Eingriffsprofil 21 (vgl. auch Fig. 3 mit eckseitigen Bohrungen) am vorderen bzw. rückseitigen Ende der Lagergutträger 3 kann somit der Kettenantrieb 14 mit Mitnehmern (nicht dargestellt, da an sich bekannt) eingreifen.

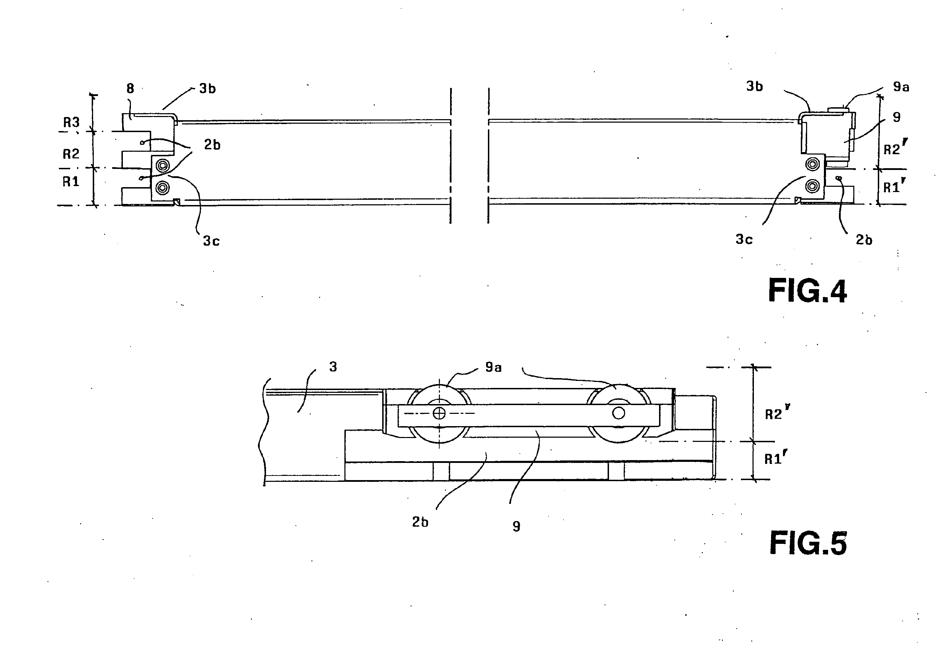

In Fig. 2 ist eine Schnittdarstellung der Lagereinrichtung 1 gemäß Fig. 1 gezeigt, wobei insbesondere die Anordnung der beiden Regalrahmen 2 und die Zubringer-Plattform 4 ersichtlich sind, mit der nach dem Einschieben eines (hier beladenen) Lagergutträgers 3 von Hand, mittels Roboter oder eines sonstigen Regalbediengerätes, die Lagergutträger 3 an den zugewiesenen Lagerplatz im Regalrahmen 2 bewegbar sind. Dies erfolgt durch Höhenbewegung der Zubringer-Plattform 4 z. B. mittels eines geschlossenen Seilstranges. Die Plattform 4 wird dabei in Höhenrichtung an einer Führungsschiene 6 geführt, um an der entsprechenden Höhenposition den Lagerträger 3 auf die jeweiligen Auflagewinkel 2a im Rastermaß R überzuschieben. Wesentlich ist dabei, dass mit der Rollenführung 4 zwei Einschubhöhen innerhalb des Rastermaßes R (von z. B. 75 mm) möglich sind, während mit der Gleitführung 8 sogar drei Einschubhöhen bei jeweils 25 mm Höhenunterschied möglich sind (vgl. Fig. 4).

In Fig. 3 ist einer der tablarartigen Lagergutträger 3 vergrößert gezeigt. An dessen Seitenflächen 3a, die in die Auflagewinkel 2a eingreifen oder sich darauf abstützen, sind Führungsnuten 2b vorgesehen. Dazu sind, wie in Fig. 3 perspektivisch dargestellt, hierbei vier Gleit- oder Rollenführungen 8 und 9 gegeneinander austauschbar befestigt, wie dies an den gleichen Befestigungspunkten (Lochbild 11) an den Schrauben 10 erkennbar ist. Die hier vorderen beiden Gleitführungen 8 sind entlang der Seitenfläche 3a so angeordnet, dass sich diese Führungsblöcke nach oben an einer Abkantung 3b des Lagergutträgers 3 abstützen. Entsprechendes gilt für die an der hier hinteren Seitenfläche 3a dargestellten Rollenführungen 9, die jedoch auch angeschweißt sein können. Zudem liegen diese jeweils an einem Winkel-Anschlag 3c an, so dass sich eine exakte Positionierung ergibt. Dadurch ergibt sich eine besonders stabile Abstützung der Lagergutträger 3 und eine optimale Krafteinleitung in den Rahmen, so dass auch bei hohen Kräften, beispielsweise bei schweren Lagergütern, eine sichere Abstützung gegeben ist.

In Fig. 4 ist eine Seitenansicht auf die Gleit- oder Rollenführungen 8 dargestellt. Die (hier vier) Gleit- oder Rollenführungen 8 und 9 liegen jeweils rechtwinklig am Winkel-Anschlag 3c an, so dass die Führungsblöcke exakt dazu ausgerichtet sind. Hierdurch ergibt sich eine vereinfachte Montage der vier Gleit- oder Rollenführungen 8 und 9. Wie ersichtlich, weist die hier linke Gleitführung 8 zwei Führungsnuten 2b auf, während an der hier rechten Rollenführung 9 nur eine Führungsnut 2b zur Auflage auf bzw. zum Eingriff der Auflagewinkel 2a vorgesehen ist, wobei jeweils an der Unterseite ein Gleitfilm, z. B. Kunststoffleisten aufgebracht sind. Damit können die Lagergutträger 3 an der Gleitführung 8 innerhalb des Rastermaßes R (von z. B. 75 mm) auf drei verschiedenen Höhen R1, R2 und R3 eingeschoben werden, während bei der hier linken Rollenführung 9 zwei verschiedene Höhenpositionen R1' und R2' möglich sind. Durch diese verschiedenen Höhenpositionen ist eine große Variabilität und optimale Lagerplatzausnutzung gegeben.

In Fig. 5 ist eine Rollenführung 9 in Seitenansicht gemäß dem Pfeil B in Fig. 3 dargestellt. Hieraus ergibt sich auch der geringfügige Überstand der Rollen 9a über die obere Abkantung 3b an der Seitenfläche 3a. Insgesamt ergibt sich somit eine Lagervorrichtung mit geräuscharmem Lauf, einfacher Bauweise und hoher Variabilität, also insgesamt ein besonders zuverlässiger Betrieb des mechanischen Schrankes.

## Patentansprüche

1. Lagervorrichtung in Form eines mechanischen Schrankes mit einer Vielzahl von Lagergutträgern, die in Regalrahmen auf Auflagewinkeln aufliegen und von einer Lagervorrichtung mit einer höhenbeweglichen Zubringer-Plattform selektiv zu einer Ein-/Auslageröffnung bewegbar sind,
**dadurch gekennzeichnet, dass**
an den Seitenflächen (3a) der Lagergutträger (3) Gleitführungen (8) mit einer engen Rasterung (R1, R2, R3) oder Rollenführungen (9) mit einer weiteren Rasterung (R1', R2') befestigt sind, die wechselweise in der Lagervorrichtung (1) mit vorgegebenem Rastermaß (R) der Auflagewinkel (2a) einlagerbar sind.

2. Lagervorrichtung nach Anspruch 1, **dadurch gekennzeichnet, dass** die Rollenführungen (9) im Rastermaß (R) der Auflagewinkel (2a) eine Führungsnut (2b) aufweisen, die eine 2/3 zu 1/3 Rasterung bildet.

3. Lagervorrichtung nach Anspruch 1, **dadurch gekennzeichnet, dass** die Gleitführungen (8) im halben oder gedrittelten Rastermaß (R) der Auflagewinkel (2a) zwei Führungsnuten (2b) aufweisen.

4. Lagervorrichtung nach einem der Ansprüche 1 bis 3, **dadurch gekennzeichnet, dass** jeweils zwei Gleit- oder Rollenführungen (8, 9) an einer Seitenfläche (3a) des Lagergutträgers (3) angeordnet sind.

5. Lagervorrichtung nach einem der Ansprüche 1 bis 4, **dadurch gekennzeichnet, dass** die Gleit- oder Rollenführungen (8, 9) von einer oberen Abkantung (3b) des Lagergutträgers (3) zumindest teilweise umgriffen sind.

6. Lagervorrichtung nach einem der Ansprüche 1 bis 5, **dadurch gekennzeichnet, dass** die Gleit- oder Rollenführungen (8, 9) an der Seitenfläche (3a) des Lagergutträgers (3) angeschweißt sind.

7. Lagervorrichtung nach einem der Ansprüche 1 bis 6, **dadurch gekennzeichnet, dass** die Gleit- oder Rollenführungen (8, 9) im Eckbereich des Lagergutträgers (3) ein Eingriffsprofil (21) aufweisen, insbesondere eine Bohrung oder einen Schlitz im unteren Bereich.

8. Lagervorrichtung nach einem der Ansprüche 5 bis 7, **dadurch gekennzeichnet, dass** pro Rollenführung (9) zwei Rollen (9a) vorgesehen sind, die geringfügig über die obere Abkantung (3b) überstehen.

9. Lagervorrichtung nach einem der Ansprüche 1 bis 8, **dadurch gekennzeichnet, dass** die Gleitführungen (8) an der Führungsnut (2b) oder ihrer Unterseite jeweils die Gleitbeschichtung, insbesondere aus reibungsarmen Kunststoffleisten aufweisen.
